# FASCICULE DE BREVET EUROPEEN

(11) **EP 4 082 333 B1**
(45) Date de publication et mention de la délivrance du brevet: **04.06.2025**
(21) Numéro de dépôt: 22169525.7
(22) Date de dépôt: 22.04.2022
(51) Int. Cl.: A01K 1/015

(54) **COUCHE ÉLASTIQUE POUR STRUCTURE DE CONFORT ADAPTÉE AU CONFORT DES ANIMAUX DANS UNE ENCEINTE D'ÉLEVAGE**
ELASTISCHE SCHICHT FÜR EINE KOMFORTSTRUKTUR, DIE FÜR DEN KOMFORT VON TIEREN IN EINER TIERZUCHTANLAGE GEEIGNET IST
ELASTIC LAYER FOR COMFORT STRUCTURE ADAPTED FOR THE COMFORT OF ANIMALS IN A FARM ENCLOSURE

(30) Priorité: 29.04.2021 FR 2104485
(43) Date de publication de la demande: 02.11.2022
(73) Titulaire: Group Elastoteck, 44390 Nort sur Erdre (FR)
(72) Inventeur: BIORET, Jean-Vincent, 44390 Petit Mars (FR)
(74) Mandataire: Jacobacci Coralis Harle

(56) Documents cités:
- WO-A1-2016/128546
- WO-A1-94/00978
- DE-U1- 202004 017 217
- FR-A1- 3 021 498

## Description

### Domaine technique de l'invention

La présente invention concerne le domaine technique des structures de confort qui sont adaptées au confort des animaux dans une enceinte d'élevage.

Elle concerne en particulier une couche élastique qui est adaptée à la fabrication de telles structures de confort.

### Etat de la technique

Le confort des animaux constitue un paramètre déterminant dans le rendement d'un élevage.

Ce confort influence notamment la santé, la façon de s'alimenter, la prise alimentaire, la fertilité et la longévité des animaux.

A cet effet, de manière courante, en étable, les bovins se reposent individuellement dans des logettes, encore couramment appelées « free stall », dans lesquelles ils sont libres de se lever et de se coucher.

Lorsqu'ils effectuent ces mouvements, les animaux sont susceptibles de se blesser. C'est en particulier le cas lorsque la litière est constituée de paille recouvrant du béton, qui ne protège pas l'animal des risques de glissades.

Pour limiter ce type d'incident et les blessures qui en découlent, il est connu d'équiper le sol de ces logettes avec des matelas adaptés pour améliorer le confort de couchage des animaux.

Ces matelas de confort comprennent pour cela, classiquement, au moins une couche élastique qui est apte à subir une déformation élastique.

Pour rester en place, ces couches élastiques doivent être fixées au sol, habituellement au moyen d'un ensemble de pièces métalliques (par exemple pointes ou visseries) convenablement réparties, voir par exemple DE 20 2004 017217 U1.

Mais, en pratique, ces pièces métalliques sont souvent saillantes par rapport à la couche élastique et elles peuvent alors être à l'origine de blessures (coupures, frottements, etc.) pour les animaux.

Il existe ainsi un besoin pour une solution qui permettrait la fixation au sol de ladite couche élastique, tout en prévenant le risque de blessures avec ses moyens de fixation.

### Présentation de l'invention

Afin de remédier à l'inconvénient précité de l'état de la technique, la présente invention propose une couche élastique pour structure de confort (par exemple tapis ou matelas) selon la revendication 1. Elle est adaptée au confort des animaux dans une enceinte d'élevage, ladite structure de confort étant destinée à recouvrir le sol d'une zone d'accueil.

La couche élastique comporte deux faces opposées :
- une face supérieure qui est apte à subir une déformation élastique et qui comporte au moins un emplacement sur lequel un animal est destiné à prendre appui, et
- une face inférieure, destinée à être orientée vers le sol de ladite zone d'accueil,
laquelle couche élastique est délimitée par des bordures dont l'une au moins desdites bordures est de préférence formée par une bande de fixation, monobloc, destinée à recevoir des moyens de solidarisation avec le sol de ladite zone d'accueil.

Et, selon l'invention, la face inférieure de la couche élastique comporte des organes saillants destinés à former une surface d'appui.

Et ladite bande de fixation est de préférence dépourvue desdits organes saillants.

Une telle structure de la bande de fixation permet une implantation de moyens de solidarisation (éventuellement sous la forme de pièces métalliques) au niveau de ladite au moins une lèvre précitée.

Ces moyens de solidarisation peuvent alors être protégés et recouverts par ladite au moins une lèvre, de manière à prévenir un contact direct avec les animaux.

Les animaux peuvent alors s'installer sur le matelas de confort, sans risque de se blesser avec les moyens de solidarisation.

De plus, les organes saillants ont pour intérêt de conférer une déformation intéressante à la couche élastique et, en corolaire, un confort intéressant pour les animaux.

D'autres caractéristiques non limitatives et avantageuses du produit conforme à l'invention, prises individuellement ou selon toutes les combinaisons techniquement possibles, sont les suivantes :
- les organes saillants sont répartis selon un motif régulier ;
- les organes saillants consistent en des plots, avantageusement de forme pyramidale ou conique, ou en des nervures transversales s'étendent parallèlement les unes par rapport aux autres, de préférence parallèlement à deux bordures longitudinales ;
- les organes saillants sont réalisés monoblocs, par rapport à la face inférieure de la couche élastique ;
- pour une zone d'accueil bordée par un couloir de circulation, ladite couche élastique comporte les bordures suivantes : une bordure longitudinale arrière, destinée à se situer le long dudit couloir de circulation, une bordure longitudinale avant, destinée à se situer à distance dudit couloir de circulation, et deux bordures latérales, et au moins ladite bordure longitudinale arrière est formée par ladite bande de fixation ;
- la bande de fixation comporte au moins une sous-couche de renfort ;
- l'épaisseur de la bande de fixation est inférieure par rapport à l'épaisseur de ladite couche élastique ;
- la bande de fixation comporte une face inférieure, s'étendant dans le prolongement de la face inférieure de ladite couche élastique, qui comporte un logement destiné à recevoir les moyens de solidarisation ; le logement consiste en une rainure qui est avantageusement adaptée à recevoir au moins un profilé ;
- la bande de fixation a une largeur allant de 30 à 100 mm, de préférence de 50 à 70 mm ;
- la couche élastique est réalisée dans au moins un matériau élastique, avantageusement choisi parmi les matériaux élastomères ou les matériaux plastiques ou élastomères thermoplastiques (TPE).

La présente invention concerne encore une structure de confort selon la revendication 8 adaptée au confort des animaux dans une enceinte d'élevage, destinée à recouvrir le sol d'une zone d'accueil, laquelle structure de confort comporte, ou consiste en, au moins une couche élastique selon l'invention.

L'invention concerne également le procédé selon la revendication 9 pour l'installation d'une structure de confort selon l'invention.

Ce procédé comprend une étape de solidarisation de la bande de fixation avec le sol de la zone d'accueil par la mise en place de moyens de solidarisation au niveau de ladite bande de fixation.

De préférence, les moyens de solidarisation sont rapportés au sein de la bande de fixation, orientée vers le sol, puis la couche élastique est manœuvrée de sorte à recourber / replier ladite bande de fixation pour former un ourlet.

L'invention concerne également l'enceinte d'élevage au sein de laquelle est ménagée au moins une zone d'accueil des animaux dont le sol est recouvert par une structure de confort selon l'invention.

Ladite bande de fixation de la couche élastique est solidarisée avec le sol par le biais de moyens de solidarisation rapportés.

De préférence, les moyens de solidarisation sont rapportés au sein de la bande de fixation, orientée vers le sol ; et ladite bande de fixation est recourbée / repliée pour former un ourlet.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique et de dessus montrant une série de logettes qui est équipée d'une structure de confort comportant une couche élastique selon l'invention ;
[Fig. 2] est une vue générale et schématique d'une couche élastique selon l'invention, représentée selon un plan de coupe transversal ;
[Fig. 3] est une vue partielle et en perspective de la face inférieure de la couche élastique revêtue d'organes saillants ;
[Fig. 4] est une vue générale et schématique de la couche élastique selon l'invention, avant sa manœuvre au sein de la série de logettes, dont la bande de fixation est solidarisée avec le sol ;
[Fig. 5] représente la couche élastique selon la figure 4, suite à sa manœuvre au sein de la série de logettes au cours de laquelle la bande de fixation est recourbée / repliée pour former un ourlet.

Il est à noter que, sur ces figures, les éléments structurels et/ou fonctionnels communs aux différentes variantes peuvent présenter les mêmes références.

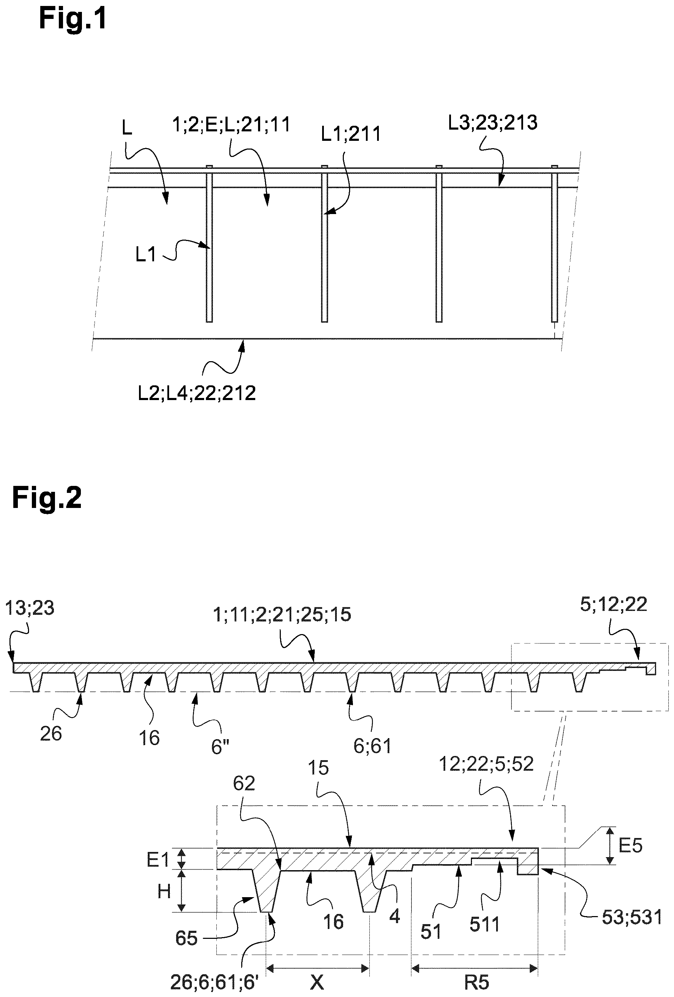

La couche élastique 1 selon l'invention, est destinée à former tout ou partie d'une structure de confort 2 (par exemple un tapis ou matelas) adaptée au confort des animaux dans une enceinte d'élevage E dans laquelle sont avantageusement ménagées des stalles de couchage (figure 1).

L'enceinte d'élevage E consiste avantageusement en une étable pour l'élevage de bovins, en particulier de bovins laitiers ou de bovins à viande.

Les stalles de couchage consistent ici en des logettes L, ménagées sur au moins une ligne, formant une zone d'accueil pour les animaux.

Les logettes L constituent un compromis entre un couchage confortable pour le bovin, le respect du mouvement levé/couché, une station debout confortable et un minimum de souillures dans la logette.

Selon la figure 1, chaque logette L, classique en soi, est délimitée par :
- deux séparations latérales L1, par exemple des structures tubulaires,
- un seuil arrière de logette L2, s'étendant le long d'un couloir d'accès,
- une limite avant L3, comprenant avantageusement une barre haute au garrot et un arrêtoir inférieur (ou limiteur d'avancement), formant le fond de la logette L, et
- un sol L4, par exemple une dalle de béton.

### Structure de confort

La structure de confort 2 est désignée encore sous le nom de « matelas de confort » ou de « tapis de confort ».

La structure de confort 2 (et sa couche élastique 1) est ici continue, de sorte à recouvrir le sol L4 des logettes L alignées.

La structure de confort 2 comporte ainsi plusieurs emplacements 21 qui sont juxtaposées longitudinalement, selon un agencement du type en bataille (figure 1).

De manière alternative, non représentée, chaque logette L peut contenir sa propre structure de confort 2 (et sa couche élastique 1) qui définit alors un emplacement 21 unique.

La structure de confort 2 a une forme générale rectangulaire qui est délimitée par deux couples de bords, à savoir :
- deux bords longitudinaux, à savoir un bord longitudinal arrière 22 destiné à s'étendre le long du seuil arrière L2 des logettes L équipées, et un bord longitudinal avant 23 destiné à s'étendre le long de la limite avant L3 de la ligne de logettes L, et
- deux bords transversaux (non représentées), destinés à se situer au niveau des séparations latérales L1 des deux logettes L en bout de ligne (non représentées).

De manière générale, tel que décrit notamment en relation avec la figure 2, la structure de confort 2 comporte encore deux faces opposées :
- une face supérieure 25, apte à subir une déformation élastique et formant les emplacements 21 sur lesquelles les animaux sont destinés à prendre appui, et
- une face inférieure 26, destinée à reposer sur le sol L4 des logettes L.

Chacun des emplacements 21 du matelas de confort 2 est destinée à accueillir ici un animal.

Chaque emplacement 21 correspond ainsi à la surface au sol L4 d'une logette L, et est délimitée latéralement par deux séparations latérales L1.

Chacun des emplacements 21 a alors une forme générale rectangulaire qui est délimitée par différentes bordures (figure 1) :
- deux bordures latérales 211, situées chacune à l'aplomb d'une séparation latérale L1 de logette L,
- une bordure arrière 212, attenante au seuil arrière L2 de la logette L (formant une partie du bord longitudinal arrière 22 du matelas de confort 2), et
- une bordure avant 213, attenante à la limite avant L3 de la logette L (formant une partie du bord longitudinal avant 23 du matelas de confort 2).

### Couche élastique de la structure de confort

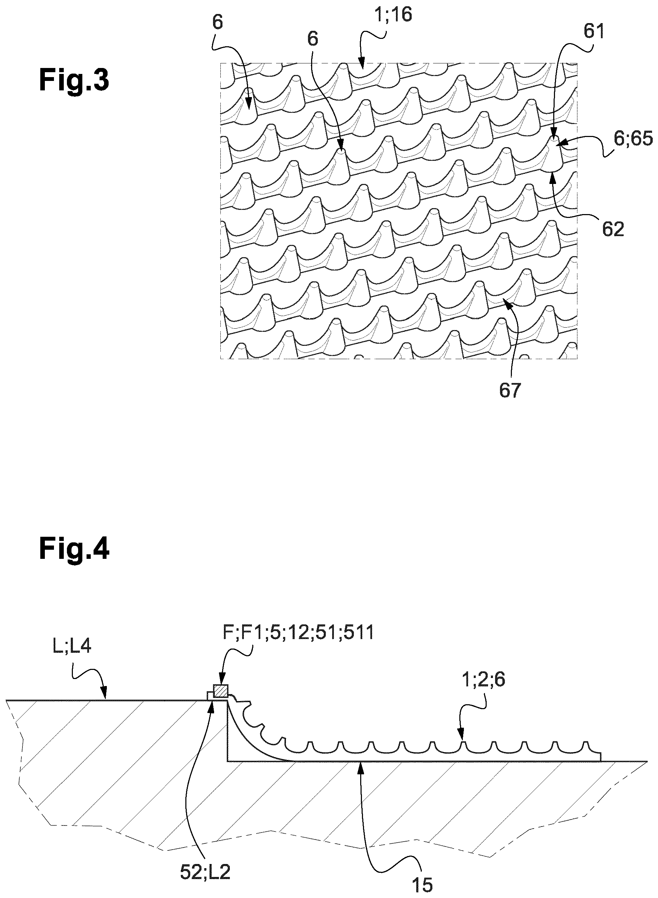

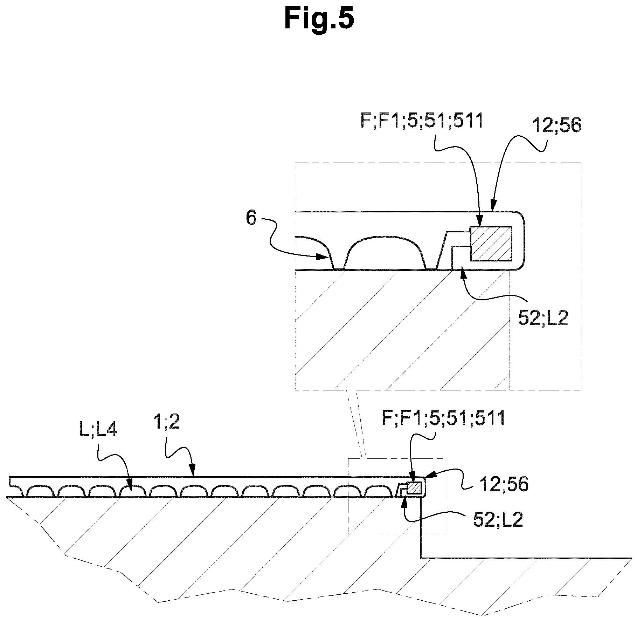

Selon l'invention, la couche élastique 1 peut former :
- une partie de la structure de confort 2 (en particulier une partie de son épaisseur), par exemple recouvrant une sous-couche de confort (non représentée), avantageusement pour former un matelas de confort, ou
- intégralement la structure de confort 2, avantageusement pour former un tapis de confort (figures 4 et 5).

En particulier, tel que représenté sur la figure 2, cette couche élastique 1 comporte avantageusement une forme générale rectangulaire qui est délimitée par deux couples de bordures :
- deux bordures longitudinales, l'une arrière 12 et l'autre avant 13, formant respectivement les bords longitudinaux arrière 22 et avant 23 de la structure de confort 2, et
- deux bordures transversales (non représentée), formant respectivement les bords transversaux de la structure de confort 2.

En particulier, la bordure longitudinale arrière 12 est destinée à se situer le long du couloir de circulation ; et la bordure longitudinale avant 13 est destinée à se situer à distance de ce même couloir de circulation.

La couche élastique 1 comporte encore deux faces opposées :
- une face supérieure 15, destinée à former la face supérieure 25 de la structure de confort 2, et
- une face inférieure 16, destinée à être orientée vers le sol L4 et formant avantageusement la face inférieure 26 de la structure de confort 2 (en particulier dans le cas d'une couche élastique 1 formant intégralement la structure de confort 2).

Ces faces supérieure et inférieure 15, 16 définissent l'épaisseur E1 de la couche élastique 1.

Cette hauteur E1 (dite encore « épaisseur ») de la couche élastique 1 est avantageusement de 5 à 10 mm.

La face supérieure 15 de la couche élastique 1 est ainsi apte à subir une déformation élastique. Elle comporte au moins un emplacement 11, correspondant aux emplacements 21 précités du matelas de confort 2, sur lequel un animal est destiné à prendre appui.

La face supérieure 15 comporte encore avantageusement un relief antidérapant, pour réduire le risque de glissement pour les animaux.

La couche élastique 1 est réalisée dans au moins un matériau apte à subir une déformation élastique, dit encore « matériau élastique », avantageusement choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

La couche élastique 1 est avantageusement réalisée monobloc, soit mono-matériau (dans un seul matériau), soit multi-matériaux (avec au moins deux sous-couches superposées réalisées dans des matériaux différents).

La couche élastique 1 peut encore contenir au moins une sous-couche de renfort 4, ménagée entre les faces supérieure et inférieure 15, 16 de la couche élastique 1.

Ladite au moins une sous-couche de renfort 4 s'étend sur au moins une partie de la surface de la couche élastique 1, avantageusement sur toute sa surface.

Ladite au moins une sous-couche de renfort 4 est avantageusement choisie parmi les fibres textiles, les fibres de métal ou tout autre produit apportant la stabilité et/ou la résistance à l'élongation.

Ladite au moins une sous-couche de renfort 4 consiste par exemple en une armature textile servant de renfort, réalisée avantageusement en un matériau choisi parmi le nylon, le coton, le polyester, le polyamide ou tout autre textile de renfort.

Selon l'invention, l'une au moins des bordures 12, 13 de cette couche élastique 1 consiste de préférence en une bande de fixation 5, monobloc, destinée à recevoir des moyens de solidarisation F avec le sol L4 de la zone d'accueil L (figure 4).

En l'espèce, la bordure longitudinale arrière 12 de cette couche élastique 1 forme avantageusement ladite bande de fixation 5.

La bande de fixation 5 se présente avantageusement sous la forme d'une lèvre pouvant être repliée / recourbée sur elle-même.

Tel que décrit en relation avec la figure 2, la bande de fixation 5 comporte avantageusement :
- une face inférieure 51, formant une partie de la face inférieure 16 de la couche élastique 1,
- une face supérieure 52, formant une partie de la face supérieure 15 de la couche élastique 1, et
- un bord périphérique libre 53.

Les faces supérieure et inférieure 51, 52 de la bande de fixation 5 s'étendent avantageusement parallèlement l'une par rapport à l'autre.

Les faces supérieure et inférieure 51, 52 de la bande de fixation 5 définissent son épaisseur E5.

L'épaisseur E5 de ladite bande de fixation 5 est inférieure à l'épaisseur E1 de la couche élastique 1.

En l'espèce, la face supérieure 52 de la bande de fixation 5 s'étend dans le plan de la face supérieure 15 de la couche élastique 1 ; et la face inférieure 51 est déportée par rapport à la face inférieure 16 de la couche élastique 1, vers la face supérieure 15 de la couche élastique 1.

De manière générale, ladite bande de fixation 5 présente avantageusement une hauteur (dit encore « épaisseur ») E5 allant de 2 à 5 mm.

La bande de fixation 5 a par exemple une largeur R5 allant de 30 à 100 mm, de préférence de 50 à 70 mm.

La bande de fixation 5 comporte avantageusement une nervure longitudinale 531, s'étendant le long de la bordure périphérique libre 53, de sorte à conférer une épaisseur supérieure à la bande de fixation 5 (pour participer à la résistance mécanique optimale lors de la mise en place des moyens de solidarisation F).

Selon l'invention, ladite bande de fixation 5 comporte ladite au moins une sous-couche de renfort 4.

Ladite au moins une sous-couche de renfort 4 s'étend entre les faces supérieure et inférieure 51, 52 de la bande de fixation 5.

Cette sous-couche de renfort 4 est intéressante pour conférer une résistance mécanique optimale lors de la mise en place des moyens de solidarisation F.

Encore selon l'invention, la face inférieure 51 de la bande de fixation 5 comporte avantageusement un logement 511 destiné à recevoir les moyens de solidarisation F.

Le logement 511 est ainsi avantageusement concave par rapport à la face inférieure 51.

En d'autres termes, le logement 511 consiste avantageusement en un évidement borgne, débouchant au travers de la face inférieure 51 de la bande de fixation 5.

Le logement 511 s'étend avantageusement sur une partie de l'épaisseur séparant la face inférieure 51 de la bande de fixation 5 et ladite au moins une sous-couche de renfort 4.

Le logement 511 consiste avantageusement en une rainure, s'étendant de préférence parallèlement au bord périphérique libre 53 (et délimitée ici latéralement par la nervure latérale 531).

La rainure 511 est avantageusement adaptée à recevoir au moins un profilé formant une partie des moyens de solidarisation F.

La largeur de la rainure 511 est avantageusement de 20 à 50 mm.

Encore selon l'invention, la face inférieure 16 de la couche élastique 1 comporte des organes saillants 6 destinés à former la surface d'appui 6" de cette couche élastique 1, avantageusement avec le sol L4 de la zone d'accueil L.

En particulier, les organes saillants 6 comportent chacun une extrémité libre 61 pour définir ensemble la surface d'appui 6".

Chaque organe saillant 6 peut avantageusement pivoter autour de son extrémité libre 61, voire peut avantageusement subir une déformation, pour conférer une déformation à la couche élastique 1.

La surface d'appui 6" est destinée à prendre appui sur une surface de réception, avantageusement le sol L4 de la zone d'accueil L ou une sous-couche de confort.

La face inférieure 16 de la couche élastique 1 est ainsi située à distance du sol L4 de la zone d'accueil L ; les organes saillants 6 sont interposés entre la face inférieure 16 de la couche élastique 1 et le sol L4 de la zone d'accueil L.

La bande de fixation 5, et en particulier sa face inférieure 51, est de préférence dépourvue de ces organes saillants 6.

De préférence, les organes saillants 6 sont répartis selon un motif régulier sur la face inférieure 16 de la couche élastique 1.

Les organes saillants 6 sont avantageusement répartis régulièrement sur l'ensemble de la face inférieure 16, sur toute la longueur et sur toute la largeur de cette face inférieure 16.

Les organes saillants 6 peuvent être monoblocs par rapport à la face inférieure 16 de la couche élastique 1.

Les organes saillants 6 « monoblocs » sont réalisés avantageusement par moulage, lors de la fabrication de la couche élastique 1.

De manière générale, les organes saillants 6 sont réalisés dans le matériau élastique précité (matériaux élastomères, ou matériaux plastiques ou élastomères thermoplastiques (TPE)).

Les organes saillants 6 présentent avantageusement une surface périphérique 65 qui relie une extrémité libre 61 et une embase 62 (figures 2 et 3).

Les organes saillants 6 présentent par exemple une hauteur H de 5 à 50 mm, de préférence de 10 à 25 mm. La hauteur H correspond à la distance axiale entre la face inférieure 16 et l'extrémité libre 61 de l'organe saillant 6.

La largeur d'embase 62 est par exemple de 10 à 20 mm. La largeur d'embase correspond à une cote (diamètre, côté par exemple) de l'embase 62 de l'organe saillant 6 solidarisé avec la face inférieure 16.

Chaque organe saillant 6 comporte encore avantageusement un axe longitudinal 6' (figure 2). La distance linéaire entre deux axes longitudinaux 6' (selon une ligne prise sur la face inférieure 16) définit un entraxe X.

Et l'entraxe X entre les organes saillants 6 juxtaposés est avantageusement de 15 à 50 mm.

En l'espèce, les organes saillants 6 consistent avantageusement en des plots (dits encore « tétons » ou « ergots »).

La surface périphérique 65 présente avantageusement une circonférence croissante depuis l'extrémité libre 61 jusqu'à l'embase 62, par exemple de forme tronconique ou de forme pyramidale.

De préférence, les organes saillants 6 sont répartis selon un motif régulier sur la face inférieure 16 de la couche élastique 1, par exemple en quinconce ou selon des lignes parallèles (figure 3).

Deux organes saillants 6 juxtaposés sont avantageusement reliés par une portion de nervure 67, de manière à optimiser la résistance desdits organes saillants 6 aux phénomènes de déformation et/ou de compression.

Selon une autre forme de réalisation (non représentée), les organes saillants 6 consistent avantageusement des nervures transversales, de préférence avec une bordure libre en forme d'aqueduc ou de sinusoïde ou ondulée.

Les nervures transversales 6 s'étendent parallèlement les unes par rapport aux autres, de préférence parallèlement aux deux bordures longitudinales 12, 13 de la couche élastique 1.

Là encore, ces organes saillants 6 présentent avantageusement une surface périphérique 65 (deux faces latérales), reliant une extrémité libre 61 (formée par une ligne transversale) et une embase 62.

### Fabrication de la couche élastique

La couche élastique 1 selon l'invention peut être fabriquée par l'assemblage d'un ensemble de sous-couches superposées, pour former un ensemble de type monobloc.

La technologie d'assemblage peut être choisie par exemple parmi la vulcanisation, le collage ou le soudage.

Le procédé pour la fabrication de la couche élastique 1 comprend :
(i) une étape de superposition de sous-couches en matériau élastomère et éventuellement d'au moins une couche de renfort 4, puis
(ii) une étape de solidarisation des surfaces en contact desdites sous-couches en matériau élastomère.

La bande de fixation 5 est avantageusement formée par moulage soit sur presse plate ou rotative.

La bande de fixation 5 est apte à recevoir une barre de fixation relativement rigide, insérée pour solidariser la couche élastique 1 car fixée dans le béton ou le bitume support.

Ladite au moins une sous-couche de renfort 4 est avantageusement continue et s'étend avantageusement jusqu'au bord des quatre faces de la couche élastique 1.

### Procédé pour l'installation d'une structure de confort

La présente invention concerne encore le procédé pour l'installation de la structure de confort 2.

Ce procédé d'installation comprend une étape de solidarisation de la bande de fixation 5 avec le sol L4 de la zone d'accueil L par la mise en place de moyens de solidarisation F au niveau de la bande de fixation 5 (figure 4).

En particulier, les moyens de solidarisation F sont avantageusement rapportés de sorte à traverser la bande de fixation 5. Ces moyens de solidarisation F sont ensuite protégés et recouverts par cette bande de fixation 5.

Les moyens de solidarisation F sont rapportés au sein de la bande de fixation 5, orientée vers le sol.

En d'autres termes, la face supérieure 52 de la bande de fixation 5 est mise en appui sur le sol L4 de la zone d'accueil L. Le cas échéant, le logement 511 est orienté vers le haut.

Pour cela, la couche élastique 1 est avantageusement disposée le long et en-dehors de la zone d'accueil L, de sorte que sa face supérieure 15 soit orientée vers le sol et au-dessus du couloir (figure 4).

La bande de fixation 5, attenante au sol et bordant la zone d'accueil L, est ensuite solidarisée avec le sol L4 de la zone d'accueil L, au niveau et le long du seuil arrière de logette L2.

Cette fixation est avantageusement réalisée en combinaison avec un profilé F1 qui est rapporté contre la face inférieure 51 de la bande de fixation 5 (orientée vers le haut), de préférence au sein du logement 511.

La bande de fixation 5 est ainsi pincée entre le profilé F1 (sus-jacent de la face inférieure 51 de la bande de fixation 5) et le sol L4 de la zone d'accueil L (sous-jacent de la face supérieure 52 de la bande de fixation 5).

La section du profilé F1 est avantageusement destinée à définir la courbure appliquée à la bande de fixation 5.

La couche élastique 1 est ensuite manœuvrée en pivotement autour de sa bande de fixation 5, de sorte à recouvrir la zone d'accueil L (figure 5).

En d'autres termes, la couche élastique 1 est disposée de sorte à recouvrir la zone d'accueil L, de sorte que sa face inférieure 16 soit orientée vers le sol.

En l'espèce, les organes saillants 6 viennent s'appuyer sur le sol L4 de la zone d'accueil L, directement ou indirectement.

En pratique, cette zone d'accueil L peut également être recouverte d'une sous-couche de confort, intercalaire, destinée ainsi à venir entre la couche élastique 1 et le sol L4.

Cette sous-couche de confort consiste avantageusement en une pièce (ou un bloc de matière), de forme générale parallélépipédique, de préférence réalisée dans un matériau élastique.

Par « matériau élastique », on entend avantageusement une plaque réalisée en granules de caoutchouc (agglomérés ou non agglomérés) ou en latex.

La masse volumique de ladite sous-couche de confort est avantageusement comprise entre 150 et 800 kg / m³, de préférence de 450 à 550 kg / m³.

La cote en épaisseur de cette sous-couche de confort est avantageusement de deux à quatre fois la cote en épaisseur E1 de la couche élastique 1.

Lors de la manœuvre, la bande de fixation 5 fixée subit une action de recourbement / repliement pour former un ourlet 56 (en forme générale de U), avantageusement de sorte à envelopper le profilé F1.

La bande de fixation 5 crée ainsi une sorte de réservation pour les moyens de solidarisation F.

Les moyens de solidarisation F, en particulier le profilé F1, sont alors avantageusement enveloppés dans l'ourlet 56 formé au niveau de la face inférieure 51 de la bande de fixation 5.

Dans ces différents modes de réalisation, les moyens de solidarisation F sont alors être protégés et recouverts par la bande de fixation 5, de manière à prévenir un contact direct avec les animaux.

Les animaux peuvent alors s'installer sur le matelas de confort 2, sans risque de se blesser avec les moyens de solidarisation F.

De plus, les organes saillants 6 améliorent encore le confort pour les animaux venant s'installer sur le matelas de confort 2.

Bien entendu, diverses autres modifications peuvent être apportées à l'invention dans le cadre des revendications annexées.

## Revendications

1. Couche élastique pour structure de confort, adaptée au confort des animaux dans une enceinte d'élevage, ladite structure de confort étant destinée à recouvrir le sol (L4) d'une zone d'accueil (L),
laquelle couche élastique (1) comporte deux faces opposées :
- une face supérieure (15) qui est apte à subir une déformation élastique et qui comporte au moins un emplacement (11) sur lequel un animal est destiné à prendre appui, et
- une face inférieure (16), destinée à être orientée vers le sol (L4) de ladite zone d'accueil (L),
laquelle couche élastique (1) est délimitée par des bordures (12, 13) dont l'une au moins desdites bordures (12, 13) est formée par une bande de fixation (5), monobloc, destinée à recevoir des moyens de solidarisation (F) avec le sol (L4) de ladite zone d'accueil (L),
laquelle face inférieure (16) de la couche élastique (1) comporte des organes saillants (6) destinés à former une surface d'appui (6"), et
ladite bande de fixation (5) est dépourvue desdits organes saillants (6)
**caractérisée en ce que** la bande de fixation (5) comporte au moins une sous-couche de renfort (4) et
**en ce que** l'épaisseur (E5) de la bande de fixation (5) est inférieure par rapport à l'épaisseur (E1) de ladite couche élastique (1), de sorte que les moyens de solidarisation (F) sont rapportés au sein de la bande de fixation (5), orientée vers le sol, puis la couche élastique (1) est manœuvrée de sorte à recourber / replier ladite bande de fixation (5) pour former un ourlet (56).

2. Couche élastique selon la revendication 1, **caractérisée en ce que** les organes saillants (6) consistent en des plots, avantageusement de forme pyramidale ou conique.

3. Couche élastique selon la revendication 1, **caractérisée en ce que** les organes saillants (6) consistent en des nervures transversales s'étendent parallèlement les unes par rapport aux autres, de préférence parallèlement à deux bordures longitudinales (12, 13).

4. Couche élastique selon l'une quelconque des revendications 1 à 3, **caractérisé en ce que** les organes saillants (6) sont réalisés monoblocs, par rapport à la face inférieure (16) de la couche élastique (1).

5. Couche élastique selon l'une quelconque des revendications 1 à 4, pour une zone d'accueil bordée par un couloir de circulation, **caractérisée en ce que** ladite couche élastique (1) comporte les bordures suivantes :
- une bordure longitudinale arrière (12), destinée à se situer le long dudit couloir de circulation,
- une bordure longitudinale avant (13), destinée à se situer à distance dudit couloir de circulation, et
- deux bordures latérales,
et **en ce qu'**au moins ladite bordure longitudinale arrière (12) est formée par ladite bande de fixation (5).

6. Couche élastique, selon l'une quelconque des revendications 1 à 5, **caractérisée en ce que** la bande de fixation (5) comporte une face inférieure (51), s'étendant dans le prolongement de la face inférieure (16) de ladite couche élastique (1), qui comporte un logement (511) destiné à recevoir les moyens de solidarisation (F), lequel logement (511) consiste avantageusement en une rainure qui est avantageusement adaptée à recevoir au moins un profilé (F1).

7. Couche élastique, selon l'une quelconque des revendications 1 à 6, **caractérisée en ce que** la bande de fixation (5) a une largeur allant de 30 à 100 mm, de préférence de 50 à 70 mm.

8. Structure de confort adaptée au confort des animaux dans une enceinte d'élevage, destinée à recouvrir le sol d'une zone d'accueil (L), laquelle structure de confort (2) comporte, ou consiste en, au moins une couche élastique (1) selon l'une quelconque des revendications 1 à 7.

9. Procédé pour l'installation d'une structure de confort selon la revendication 8, **caractérisé en ce qu'**il comprend une étape de solidarisation de la bande de fixation (5) avec le sol (L4) de la zone d'accueil (L) par la mise en place de moyens de solidarisation (F) au niveau de ladite bande de fixation (5),
lesquels moyens de solidarisation (F) sont rapportés au sein de la bande de fixation (5), orientée vers le sol, puis la couche élastique (1) est manœuvrée de sorte à recourber / replier ladite bande de fixation (5) pour former un ourlet (56).

10. Enceinte d'élevage au sein de laquelle est ménagée au moins une zone d'accueil (L) des animaux dont le sol (L4) est recouvert par une structure de confort (2) selon la revendication 8,
en ce que ladite bande de fixation (5) de la couche élastique (1) est solidarisée avec le sol (L4) par le biais de moyens de solidarisation (F) rapportés, et
en ce que les moyens de solidarisation (F) sont rapportés au sein de la bande de fixation (5), orientée vers le sol,
et en ce que ladite bande de fixation (5) est recourbée / repliée pour former un ourlet (56).

## Patentansprüche

1. Elastische Schicht für eine Komfortstruktur, die für den Komfort von Tieren in einer Tierzuchtanlage geeignet ist, wobei die Komfortstruktur dazu bestimmt ist, den Boden (L4) eines Aufnahmebereichs (L) zu bedecken,
wobei die elastische Schicht (1) zwei entgegengesetzte Seiten aufweist:
- eine Oberseite (15), die dazu ausgelegt ist, eine elastische Verformung zu ertragen, und die mindestens einen Platz (11) aufweist, auf dem ein Tier aufliegen soll, und
- eine Unterseite (16), die dazu bestimmt ist, zum Boden (L4) des Aufnahmebereichs (L) hin gerichtet zu sein,
wobei die elastische Schicht (1) durch Ränder (12, 13) begrenzt ist, von denen mindestens einer der Ränder (12, 13) durch ein einstückiges Befestigungsband (5) gebildet ist, das dazu bestimmt ist, Mittel (F) zum festen Verbinden mit dem Boden (L4) des Aufnahmebereichs (L) aufzunehmen,
wobei die Unterseite (16) der elastischen Schicht (1) hervorstehende Organe (6) aufweist, die dazu bestimmt sind, eine Auflageoberfläche (6") zu bilden, und wobei das Befestigungsband (5) keine hervorstehenden Organe (6) aufweist, **dadurch gekennzeichnet, daß** das Befestigungsband (5) mindestens eine Verstärkungsunterschicht (4) aufweist und
**dadurch gekennzeichnet, daß** die Dicke (E5) des Befestigungsbands (5) geringer als die Dicke (E1) der elastischen Schicht (1) ist, so daß die Mittel (F) zum festen Verbinden an dem zum Boden hin gerichteten Befestigungsband (5) angebracht werden und die elastische Schicht (1) dann so bewegt wird, daß das Befestigungsband (5) gekrümmt/umgeschlagen wird, um einen Saum (56) zu bilden.

2. Elastische Schicht gemäß Anspruch 1, **dadurch gekennzeichnet, daß** die hervorstehenden Organe (6) aus vorzugsweise pyramidenförmigen oder konischen Kontaktkörpern bestehen.

3. Elastische Schicht gemäß Anspruch 1, **dadurch gekennzeichnet, daß** die hervorstehenden Organe (6) aus quer verlaufenden, zueinander und vorzugsweise zu den beiden Längsrändern (12, 13) parallel verlaufenden Rippen bestehen.

4. Elastische Schicht gemäß einem der Ansprüche 1 bis 3, **dadurch gekennzeichnet, daß** die hervorstehenden Organe (6) in Bezug auf die Unterseite (16) der elastischen Schicht (1) einstückig gefertigt sind.

5. Elastische Schicht gemäß einem der Ansprüche 1 bis 4 für einen von einem Korridor umfaßten Aufnahmebereich, **dadurch gekennzeichnet, daß** die elastische Schicht (1) die folgenden Ränder aufweist:
- einen hinteren Längsrand (12), der dazu bestimmt ist, zum Korridor hin gelegen zu sein,
- einen vorderen Längsrand (13), der dazu bestimmt ist, vom Korridor entfernt zu liegen,
- zwei Seitenränder,
und daß mindestens der hintere Längsrand (12) vom Befestigungsband (5) gebildet ist.

6. Elastische Schicht gemäß einem der Ansprüche 1 bis 5, **dadurch gekennzeichnet, daß** das Befestigungsband (5) eine sich in Verlängerung der Unterseite 16) der elastischen Schicht (1) erstreckende Unterseite (51) aufweist, die eine Aufnahme (511) aufweist, die dazu bestimmt ist, die Befestigungsmittel (F) aufzunehmen, wobei die Aufnahme (511) vorteilhafterweise aus einer Rinne besteht, die vorteilhafterweise dazu ausgelegt ist, mindestens ein Profil (F1) aufzunehmen.

7. Elastische Schicht gemäß einem der Ansprüche 1 bis 6, **dadurch gekennzeichnet, daß** das Befestigungsband (5) eine Breite von 30 bis 100 mm, vorzugsweise von 50 bis 70 mm, hat.

8. Komfortstruktur, die für den Komfort von Tieren in einer Tierzuchtanlage geeignet ist und dazu bestimmt ist, den Boden eines Aufnahmebereichs (L) zu bedecken, wobei die Komfortstruktur (2) mindestens eine elastische Schicht (1) gemäß einem der Ansprüche 1 bis 7 aufweist beziehungsweise daraus besteht.

9. Verfahren zum Installieren einer Komfortstruktur gemäß Anspruch 8, **dadurch gekennzeichnet, daß** es einen Schritt des festen Verbindens des Befestigungsbands (5) mit dem Boden (L4) des Aufnahmebereichs (L) durch Mittel (F) zum Befestigen am Befestigungsband (5) aufweist,
wobei die Befestigungsmittel (F) an dem zum Boden hin gerichteten Befestigungsband (5) angebracht werden und die elastische Schicht (1) dann so bewegt wird, daß das Befestigungsband (5) gekrümmt/umgeschlagen wird, um einen Saum (56) zu bilden.

10. Tierzuchtanlage, in der mindestens ein Aufnahmebereich (L) für Tiere eingerichtet ist, dessen Boden (L4) mit einer Komfortstruktur (2) gemäß Anspruch 8 bedeckt ist, daß das Befestigungsband (5) der elastischen Schicht (1) mittels hinzugefügter Mittel (F) zum Befestigen mit dem Boden (L4) verbunden ist und
daß die Mittel (F) zum Befestigen am zum Boden hin gerichteten Befestigungsband (5) hinzugefügt sind
und daß das Befestigungsband (5) gekrümmt/umgeschlagen wird, um einen Saum (56) zu bilden.

## Claims

1. Elastic layer for a comfort structure adapted for the comfort of animals in a farm enclosure, said comfort structure being intended to cover a floor (L4) of a reception area (L),
the elastic layer (1) comprising two opposite faces:
- an upper face (15) which is designed for being deformed and which comprises at least one place (11) on which an animal shall be supported, and
- a lower face (16) intended to be turned to the floor (L4) of the reception area (L), said elastic layer (1) is delineated by borders (12, 13), at least one of these borders (12, 13) being formed by a one-piece fixing band (5) intended for receiving means (F) for fixing on the floor (L4) of the reception area (L),
said lower face (16) of the elastic layer (1) comprising protruding bodies (6) intended to form a reception surface (6"), and
said fixing band (5) not having said protruding bodies (6),
**characterized in that** the fixing band (5) comprises at least one underlying reinforcing layer (4) and
**in that** the thickness (E5) of the fixing band (5) is less than the thickness (E1) of the elastic layer (1) so that the fixing means (F) are added to the fixing band (5), turned towards the floor, then the elastic layer (1) being operated such that the fixing band (5) is curved/folded to form a hem (56).

2. Elastic layer according to claim 1, **characterized in that** the protruding bodies (6) consist of studs having advantageously a pyramid or conical shape.

3. Elastic layer according to claim 1, **characterized in that** the protruding bodies (6) consist of transverse ribs which extend in parallel to one another and preferably in parallel to the lengthwise borders (12, 13).

4. Elastic layer according to one of claims 1 to 3, **characterized in that** the protruding bodies (6) are made in one piece with respect to the lower face (16) of the elastic layer (1).

5. Elastic layer according to one of claims 1 to 4 for a reception area bordered by a wallway, **characterized in that** the elastic layer (1) comprises the following borders:
- a rear longitudinal border (12) intended to be positioned along said wallway,
- a front longitudinal border (13) intended to be positioned at a distance from the wallway,
- two lateral borders,
and **in that** at least the rear longitudinal border is formed by said fixing band (5).

6. Elastic layer according to one of claims 1 to 5, **characterized in that** the fixing band (5) comprises a lower face (51) extending as an extension of the lower face (16) of the elastic layer (1) and having a recess (511) intended to house the fixing means (F), said recess (511) consisting advantageously of a slot that is advantageously formed to house at least one profile (F1).

7. Elastic layer according to one of claims 1 to 6, **characterized in that** the fixing band (5) has a width ranging from 30 to 100 mm, preferably from 50 to 70 mm.

8. Comfort structure adapted for the comfort of animals in a farm enclosure intended to cover the floor of a reception area (L), said comfort structure (2) comprising or consisting of at least one elastic layer according to one of claims 1 to 7.

9. Method of installing a comfort structure according to claim 8, **characterized in that** it comprises a fixing step of the fixing band (5) at the floor (L4) of the reception area (L) by installing fixing means (F) at the fixing band (5),
said fixing means (F) being added to the fixing band (5) turned to the floor, and the elastic layer (1) then being operated such as to bend/fold said fixing band (5) to form a hem (56).

10. Farm enclosure within which at least one reception area (L) for animals is arranged, the floor (L4) of which is covered with a comfort structure (2) according to claim 8, in that said fixing band (5) of the plastic layer (1) is fixed on the floor (L4) by means of added fixing means (F) and
in that the fixing means (F) are added to the fixing band (5) turned to the floor, and in that the fixing band (5) is curved/folded to form a hem (56).
